# EUROPEAN PATENT APPLICATION

(11) **EP 4 764 459 A1**
(43) Date of publication of application: **24.06.2026**
(21) Application number: 24221691.9
(22) Date of filing: 19.12.2024
(51) Int. Cl.: G01N 21/65, G01J 3/44

(54) **APPARATUS AND METHOD FOR HIGH RESOLUTION RAMAN SPECTROSCOPY**

(71) Applicant: Stichting IMEC Nederland, 6708 WH Wageningen (NL)
(72) Inventor: ZENTILE, Mark, 6822 NB Arnhem (NL); PRANGSMA, Jord Cornelis, 6721 GM Bennekom (NL); OFFERMANS, Peter, 5301 NG Zaltbommel (NL); VAN KILSDONK, Mathijs, 6512 DH Nijmegen (NL); VAN NIEUWSTADT, Joris, 3951 EB Maarn (NL)
(74) Representative: AWA Sweden AB

(57) **Abstract**

There is provided an apparatus for Raman spectroscopy comprising:
a tunable laser configured to output laser light towards a sample for inducing Raman scattered light from the sample, wherein a wavelength of the laser light is tunable;
a light collecting and filtering arrangement configured to collect the Raman scattered light in a collection angle from the sample, wherein the arrangement provides the Raman scattered light as incident light onto a narrow bandpass filter comprising a transmission band with a FWHM of 0.2 nm, and preferably 0.02 nm or less, and wherein an angle of incidence of the incident light is matched to a filter acceptance angle of the bandpass filter; and
a light detector, configured to receive the Raman scattered light filtered by the arrangement and to detect the Raman scattered light.

The apparatus is configured to scan the wavelength of the laser light and to detect the intensity of the Raman scattered light by the light detector for forming a Raman spectrum of the sample.

## Description

### Technical field

The present disclosure relates to Raman spectroscopy, and more specifically to an apparatus and a method for high resolution Raman spectroscopy.

### Background

Raman spectroscopy is an optical measurement technique commonly used for chemical analysis in a variety of industrial and scientific applications. Raman spectroscopy may be used to identify chemicals, via their so-called spectral fingerprints, to detect their presence and to quantify their concentration. Raman spectroscopy may also be used to detect and study structural changes in molecules, such as proteins, via small changes in the shape of Raman lines as well as shifts in their frequency.

Raman spectroscopy is usually performed by illuminating a sample with the light from a fixed laser wavelength, collecting the inelastically scattered Raman light, and analyzing the spectrum of the light by means of a spectrometer, usually coupled to an imaging detector.

One limitation of Raman spectroscopy is that the equipment is typically costly and bulky. Other limitations are related to low sensitivity and spectral resolution. Furthermore, for some samples such as for example organic compounds, the illuminating laser light may induce emission of fluorescence from the sample, which interferes with the Raman signal.

When employing Raman spectroscopy to identify chemicals, it is desirable to acquire spectral data from the full fingerprint region, which typically ranges across 100 nm or more. However, when looking for subtle effects related to structural changes in known substances, a high spectral resolution is required to enable detailed investigations of single Raman lines and detect small deviations. Having access to the full fingerprint region, whilst also having enough resolution to observe small changes to each line, is challenging partly due to limitations in spectrometers.

Hence, there is a need in the art for further improvements related to Raman spectroscopy.

### Summary

An objective of the present disclosure is to mitigate, alleviate or eliminate one or more of the above-identified deficiencies in the art and disadvantages singly or in any combination. These and other objectives are at least partly met by the invention as defined in the independent claims. Preferred embodiments are set out in the dependent claims.

According to a first aspect there is provided an apparatus for Raman spectroscopy, said apparatus comprising:
a tunable laser configured to output laser light towards a sample for inducing generation of Raman scattered light from the sample, wherein a wavelength of the laser light is tunable over a wavelength range;
a light collecting and filtering arrangement configured to receive and collect the Raman scattered light in a collection angle from the sample, wherein the light collecting and filtering arrangement is configured to provide the collected Raman scattered light as incident light onto a bandpass filter, wherein the bandpass filter is a narrow bandpass filter comprising a transmission band with a full width at half maximum, FWHM, of 0.2 nm or less, and preferably 0.02 nm or less, and wherein an angle of incidence of the incident light is matched to a filter acceptance angle of the bandpass filter; and
a light detector, configured to receive the Raman scattered light filtered by the light collecting and filtering arrangement and to detect an intensity of the received Raman scattered light;
wherein the apparatus is configured to scan the wavelength of the output laser light over the wavelength range and to detect the intensity of the received Raman scattered light by the light detector for forming a Raman spectrum of the sample.

Raman scattering typically occurs when excitation light illuminates molecules in a sample. The molecules may either gain or lose vibrational energy resulting in a wavelength shift of the scattered light with respect to the excitation light. The energy difference between the excitation light and the Raman shifted light is constant. In other words, the Raman shifted light for a specific transition has a fixed frequency shift with respect to the excitation light.

The composition of the sample and the molecular structure therein provide a wavelength spectrum with a number of peaks, in which the wavelength position of the peaks, the number of peaks, and the relative intensity of the peaks provides a fingerprint of the molecular composition of the sample. Typically, such a fingerprint region may range from about 300 to 1900 cm⁻¹ shift from the excitation light. By way of example, if excitation light of 785 nm is used, the fingerprint region may correspond to wavelengths of approximately 800 to 920 nm.

Given as an example, the source of excitation light may be a laser, such as a tunable laser. However, it should be understood that also other sources of excitation light are conceivable.

By the term "laser" is here meant any unit, device and/or element at which laser light may be generated. By way of example, the laser of the present disclosure is typically a laser diode, however it may alternatively be a different type of laser.

In this context the term "light" should be allowed a broad interpretation, not limited to visible electromagnetic radiation. Rather, the term "light" may also include for example ultra-violet light and infra-red light.

It serves to mention that when performing Raman spectroscopy, it's desirable that the light has a narrow linewidth. Typically, the linewidth of the light should be narrower than the desired spectral resolution of the Raman spectrum. Further, it is desirable that the laser is more narrowband than the width of the transmission band of the bandpass filter used for detection.

The apparatus of the present disclosure comprises a tunable laser. Thus, the wavelength of the laser light output form the tunable laser may be tuned, or scanned, over the wavelength range in which the tunable laser is tunable. Typically, the tunable laser may be a tunable diode laser. However, it is conceivable that the tunable laser may alternatively be of a different type, such as a tunable dye laser.

Since the difference in frequency of Raman lines to the excitation light of the laser is constant, the tunable laser may be used in combination with a bandpass filter in front of a light detector, to acquire a Raman spectrum of the sample. As the laser wavelength is tuned over its wavelength range, the induced Raman spectrum is scanned over the transmission band of the bandpass filter. Thus, at any instant, only the part of the Raman spectrum that passes through the bandpass filter, is detected by the light detector. By the present arrangement, the Raman spectrum from the fingerprint region may be acquired by the light detector by tuning the laser wavelength widely enough such that the whole wavelength range of the fingerprint region is scanned over the bandpass filter.

The light collecting and filtering arrangement is configured to receive and collect the Raman scattered light in a collection angle from the sample. Raman light is typically weak compared to other possible types of light that may occur in optical diagnostics, such as elastic (Rayleigh and Mie) scattering, induced fluorescence, induced incandescence, or ambient light. Therefore, in order to ensure a good quality of the detected signal, i.e. the response signal from the detector, the light collecting and filtering arrangement should not severely limit the etendue of the Raman light. It is thus of importance that Raman scattered light is collected from a large collection angle and provided to the light detector.

In order to provide a high spectral resolution, the bandpass filter is a narrow bandpass filter with a transmission band with a full width at half maximum, FWHM, of 0.2 nm or less, and preferably 0.02 nm or less. By way of example, the narrow bandpass filter may be provided by a single filter, or it may alternatively be provided as a combination of a plurality of filters. Further, the narrow bandpass filter may be non-periodic, i.e. have a non-periodic transmission band.

The light collecting and filtering arrangement is configured to provide the collected Raman scattered light as incident light onto the bandpass filter. In order not to lose a significant part of the collected light during filtering, the angle of incidence of the incident light onto the bandpass filter is matched to the filter acceptance angle of the bandpass filter. By the term "matched" is here meant that at least a major part of the light within the angle of incidence is uniformly filtered with respect to angle of incidence. Typically, the angle of incidence onto the bandpass filter is not larger than the acceptance angle of the bandpass filter. In this manner, the bandpass filters spectral filtering effect may be the same, independently of the angle of incidence. Put differently, the light collecting and filtering arrangement may be configured to receive and collect the Raman scattered light in a large collection angle from the sample, wherein the light collecting and filtering arrangement is configured to provide a bandpass filter filtering the Raman scattered light uniformly across the large collection angle, within which the Raman scattered light is collected.

By way of example, the bandpass filter may be of a type of filter with a very large acceptance angle. In such a case, the bandpass filter may collect and filter the Raman scattered light. Given as a non-limiting example, such a filter may be an atomic or molecular line filter.

However, a bandpass filter with a narrow transmission band, may alternatively comprise a narrow acceptance angle. In such a case, the Raman scattered light may first be collected in a large collection angle from the sample. Subsequently, the collected Raman scattered light may be converted, for example collimated, to having a more narrow angle, such that when the collected Raman scattered light is incident onto the bandpass filter, the angle of incidence matches the narrow acceptance angle of the bandpass filter. Given as non-limiting examples, such bandpass filters may comprise an optical resonator, such as a Bragg grating, a ring resonator, or an etalon. By way of example, in order to collect Raman scattered light at a large collection angle and to confine the collected Raman scattered light into a narrow angle matching the acceptance angle of the bandpass filter, a waveguide may be used.

The waveguide may collect the Raman scattered light by evanescent coupling from the sample arranged for example on a side of the waveguide, from where the Raman scattered light may be coupled into the waveguide. The collected Raman scattered light may propagate along the waveguide at a more confined angle, to reach the bandpass filter at another end of the waveguide. The light output from the waveguide to the bandpass filter may thus have an angle of incidence onto the bandpass filter that matches, e.g. falls within, the acceptance angle of the bandpass filter. Other types of waveguides are also conceivable, such as hollow-core fibers.

By the term "light detector" is here meant any unit or device reacting to light impinging onto the unit or device, by generating an electrical signal as a response to the light intensity. By way of example, the light detector may be a photodiode. By way of further example, the light detector may be an avalanche photodiode. By way of example, the avalanche photodiode may be, but is not limited to, a single photon counting module. Given as yet another non-limiting example, the light detector may be a photo-multiplier tubes (PMT).

By the present arrangement, the Raman spectrum from the fingerprint region of the sample may be acquired by the light detector by tuning the laser wavelength widely enough such that the whole wavelength range of the fingerprint region is scanned over the bandpass filter and detected by the light detector over time.

An advantage is that an apparatus for Raman spectroscopy with a high spectral resolution may be provided, while at the same time providing full spectral range of the fingerprint region of the Raman scattered light. By way of example, the spectral resolution may be as high as 10 pm wavelength resolution or better. The high spectral resolution enables studies to be made of structural changes in molecules, such as proteins, via small changes in the shape of Raman lines as well as shifts in their frequency. These subtle effects may be studied by zooming into a single Raman line and looking for small changes. By conventional Raman spectroscopy techniques, it is challenging to achieve access to the full fingerprint region, while also having enough resolution to observe small changes to each line. This is at least partially due to limitations in spectrometers normally used, with trade-off between spectral range, spectral resolution, size, etendue, signal-to-noise ratio, cost and device robustness.

Another advantage is that an apparatus with high etendue for collection of Raman scattered light may be provided. The arrangement described above allows for a large collection angle to be used for collection of a large portion of the isotropic Raman scattered light from the sample, and allowing combining this with filtering the Raman scattered light uniformly across the large collection angle, within which the Raman scattered light is collected. As described above, the apparatus is configured for collecting the Raman scattered light such that, once it is incident onto the bandpass filter, it matches the acceptance angle of the narrow bandpass filter. In this manner, a light collecting and filtering arrangement capable of filtering the collected Raman scattered light uniformly across the collection angle within which the Raman scattered light is collected, such that most, and possibly all, collected Raman scattered light within the transmission band of the narrow bandpass filter may be coupled into the detector. This, in turn, improves the signal-to-noise ratio of the detection. Improved signal-to-noise ratio is of particular importance in Raman spectroscopy, since Raman scattering is typically weak compared to other possible types of light that may occur in optical diagnostics.

Yet another advantage is that the apparatus may be provided in a compact form factor. The apparatus does not require any spectrometer as normally used in conventional Raman spectroscopy. And since a spectrometer is not required, an imaging detector, such as a charge-coupled device (CCD) or a complementary metal oxide semiconductor (CMOS), otherwise employed to detect the spectrum from the spectrometer, may also be omitted. Further, in case a tunable diode laser is used to illuminate the sample, the apparatus does not require any bulky tunable dye laser either. All in all, a compact apparatus for Raman spectroscopy may be provided, which may even be integrated onto a photonic integrated circuit (PIC).

Yet another advantage is that the apparatus for Raman spectroscopy may be provided at low-cost. The bulky components such as the spectrometer, the imaging detector and the tunable dye laser are generally also expensive. Since these may be excluded from the apparatus of the present disclosure, the apparatus may thus be provided at a significantly lower cost than conventional systems for Raman spectroscopy.

According to an embodiment, the bandpass filter is any one of an atomic line filter or a molecular line filter.

An atomic or molecular line filter is a filter comprising an atomic or molecular gas as the filtering medium.

By way of example, atomic and molecular line filters may work by rotating the plane of polarization of light when a magnetic field is applied to the medium of the filter. When the medium is an atomic or molecular gas, the rotation may only occur in the vicinity of the atomic or molecular transition. By placing the medium between crossed polarizers, a bandpass filter may be formed. This type of magneto-optical atomic or molecular line filters may have a large field of view. Limitations of angular acceptance of these types of filters may come from the field of view of the polarizers, and the differing magneto-optical rotation that happens with different angles. The acceptance angle of the polarizers may be up to 40 degrees. The field of view from the differing magneto-optical rotation within the atomic or molecular gas may be as large as 90 degrees (+/- 45 degrees). These are very large acceptance angles. Hence, atomic and molecular line filters may be used to provide a high etendue as compared to other ultranarrow bandpass filters that work by interference between reflective layers.

By way of further example, an atomic or molecular line filter may alternatively works by on-resonance scattering. In other words, the filter may work by scattering only the light which is on-resonance with the atomic or molecular transition. Thus, a light detector placed off the optical axis of illuminating laser light may detect light that is scattered by the line filter, i.e. the narrow on-resonance light. Light of other wavelengths than the on-resonance light may instead be transmitted through the filter, without being scattered, and may therefore not reach the light detector. This effectively provides a narrow bandpass filter.

The range of collection angles may relate to the numerical aperture (NA) of the collecting optics. The acceptance angle may be specified as a half angle, i.e. the angle from normal incidence to the outer acceptance angle at one side.

Atomic and molecular line filter may be used in case the light emanates from a large area. In these cases Raman scattered light may be collected from a large a range of angles, e.g. up to 65 degrees with a high-NA objective. An atomic or molecular line filter may have a very large acceptance angle limit, thus does not necessarily require stringent collimation of the collected light in order for the filter to filter the Raman scattered light uniformly across the large collection angle, within which the Raman scattered light is collected.

An advantage with this embodiment is that a narrow bandpass filter may be easily provided, that by itself allows for a large light collection angle and therefore large etendue.

Another advantage is that collimation of the collected Raman scattered light may not be strictly required. This in turn allows for a larger field of view and the atomic and molecular line filter may therefore be used also when larger samples are investigated, and not merely samples where light emanated from a small spot.

According to an embodiment, the light collecting and filtering arrangement further comprises an interference filter, wherein the atomic line filter or molecular line filter and the interference filter form a filter set, wherein the light collecting and filtering arrangement is configured to provide the collected Raman scattered light as incident light onto the filter set, and wherein the filter set is configured to transmit light at a single line of the atomic line filter or molecular line filter.

Atomic and molecular line filters typically have more than one resonance, occurring at different wavelengths. Therefore, an atomic or molecular line filter may have several transmission bands, one at each of the resonances. If different transmission bands occur within the sensitivity of the light detector, then light at different wavelength bands may unintentionally reach the light detector simultaneously, which may cause interference. Interference of different wavelengths on the light detector may be avoided combining the atomic or molecular line filter with an interference filter.

An advantage is that interference between different wavelength may be avoided in a simple manner.

According to an embodiment, the light collecting and filtering arrangement further comprises a dichroic mirror, wherein the atomic line filter or molecular line filter and the dichroic mirror form a filter set, wherein the light collecting and filtering arrangement is configured to provide the collected Raman scattered light as incident light onto the filter set, and wherein the filter set is configured to transmit light at a first line and a second line of the atomic line filter or molecular line filter, into a first path and a second path, respectively.

An alternative manner of preventing interference of different wavelengths on the light detector may be to combine the atomic or molecular line filter with a dichroic mirror. The dichroic mirror may provide a cut-off wavelength at which transmitted and reflected light are spectrally separated, such that only Raman scattered light above or below the cut-off wavelength may reach the light detector.

According to an embodiment, the tunable laser is any one of a grating based external-cavity diode laser, ECDL, a distributed Bragg reflector ECDL, a Titanium-sapphire laser, an on-chip Titanium-sapphire laser, a Vernier ring based on-chip ECDL, or a Mach-Zehnder interferometer based on-chip ECDL.

It should be realized that atomic and molecular line filters may not be freely constructed for any wavelength or transmission band. These filters operate only in the vicinity of the atomic or molecular transition. However, tunable lasers may be designed with enough choice of tuning range to overcome this restriction. Thus, by selecting specific combinations of atomic or molecular line filters and tunable lasers, the apparatus for Raman spectroscopy may access the full Raman fingerprint region. By way of example, tunable lasers that may generate laser light tunable in a wavelength range suitable for use with atomic and molecular line filters may be, but is not limited to, ECDLs, distributed Bragg reflector ECDLs, Titanium-sapphire lasers, as well as lasers utilizing integrated photonics techniques such as on-chip Titanium-sapphire lasers , Vernier ring based on-chip ECDLs and Mach-Zehnder interferometer based on-chip ECDLs.

It serves to mention that in some applications, the required wavelength range over which the tunable laser needs to be tunable, may be as small as 3 nm. In such cases, the tunable laser may alternatively be a distributed-feedback (DFB) laser or a distributed Bragg reflector (DBR) laser. By way of example, a single DFB or DBR laser, in combination with three bandpass filters, may have enough tunability to cover the appropriate part of the Raman spectrum.

According to an embodiment, the bandpass filter comprises an optical resonator.

According to an embodiment, the bandpass filter comprises any one of a Bragg grating, a set of ring resonators, or a combination of an etalon and interference filter.

Bandpass filters based on an optical resonator may provide a narrow transmission band, and may therefore be suitable for Raman spectroscopy. However, it should be realized that a bandpass filter based on an optical resonator may typically comprise a narrow acceptance angle. In order to provide an apparatus for Raman spectroscopy with good etendue, the Raman scattered light may first be collected in a large collection angle from the sample, and subsequently be collimated to having a more narrow angle, before being provided to the bandpass filter. In this manner, it may be ensured that the collected Raman scattered light incident onto the bandpass filter has an angle of incidence that matches the narrow acceptance angle of the bandpass filter. By way of example, the Raman scattered light may be collected at a large collection angle by a waveguide or a collimating lens.

It serves to mention that a Bragg grating based bandpass filter may be for example a volume Bragg grating, an on-chip Bragg grating or a fiber Bragg grating.

An advantage with this embodiment is that an apparatus for Raman spectroscopy comprising a bandpass filters with a narrow transmission band may be provided, thereby providing high spectral resolution.

According to an embodiment, the light collection and filtering arrangement comprises a waveguide configured to collect the Raman scattered light in a collection angle from the sample, and to guide the collected Raman scattered light to the bandpass filter.

By the term "waveguide" is here meant any unit, device and/or element within which light may be guided, and within which transmission is restricted to a single direction, thereby providing transmission with low loss. By way of example, light may be reflected on inner walls of the waveguide by total internal reflection or by means of a reflective coating provided on the walls of the waveguide. Given as non-limiting examples, the waveguide may be a transparent dielectric waveguide or an optical fiber.

According to an embodiment, the apparatus is further configured to receive the sample on a side of the waveguide, and wherein the waveguide is configured to collect the Raman scattered light by evanescent coupling from the sample into the waveguide.

According to an embodiment, the waveguide is a hollow-core fiber configured to receive the sample in a hollow core of the hollow-core fiber, and to guide the collected Raman scattered light inside and along the hollow-core fiber, to the bandpass filter.

Thus, in a hollow-core fiber, the sample may by held within the region where the collected Raman scattered light is guided. This may also be the case for e.g. chip based slot waveguides. In other words, the light from the sample is collected by the parts of the hollow-core fiber surrounding the sample, such that the collected light is guided in the hollow core.

When using waveguides or optical fibers for light collection, the light typically emanates from a small spot, e.g. < 10 µm in diameter. Therefore, the Raman scattered light may be collimated well into a small enough beam diameter with a small enough beam divergence to be accepted by narrow bandpass filters based on optical resonator, such as etalons, fiber Bragg gratings, and volume holographic gratings.

Given as non-limiting example, typical half angles of acceptance may be 12 degrees for a hollow-core photonic crystal fiber, 3 degrees for a hollow-core anti-resonant fiber (sometimes referred to as a hollow-core negative curvature optical fiber), and up to 40 degrees for a silicon nitride waveguide. In case an objective lens is used to collect the Raman scattered light, collection angles as high as 65 degrees may be provided.

According to an embodiment, the waveguide is further configured to guide the laser light from the tunable laser towards the sample.

Thus, rather than detecting light emanating from a focused excitation spot of the sample, the waveguide may be used to provide the laser light for illuminating the sample to induce generation of the Raman scattered light as well as to collect the Raman scattered light from the sample by evanescent coupling.

An advantage with this embodiment is that the apparatus for Raman spectroscopy may be integrated onto a photonic integrated circuit (PIC), providing a very compact apparatus. In turn, an apparatus with much higher mechanically stability may be provided. By way of example, the waveguide may be provided with the laser light from the tunable laser and the Raman scattered light may be collected by the waveguide coupled to a photodiode after passing the narrow bandpass filter. The narrow bandpass filter may be implemented using a set of ring resonators forming a Vernier filter with a bandwidth of less than 50 pm.

According to an embodiment, the light collecting and filtering arrangement is provided as a photonic integrated circuit, PIC.

An advantage with this embodiment is that the apparatus may be provided in a compact form factor. As previously mentioned, the apparatus does not require any spectrometer, imaging detector, or tunable due laser. Therefore, the apparatus may be integrated onto a PIC, thereby providing a compact apparatus for Raman spectroscopy.

Another advantage is that a robust apparatus for Raman spectroscopy may be provided. PICs typically provide high mechanical stability, which in turn enables stable control of light beams to and from the sample.

According to an embodiment, the light collecting and filtering arrangement comprises a plurality of bandpass filters, wherein each bandpass filter of the plurality of bandpass filters has a different central bandpass wavelength.

As previously described, a broadly tunable laser and a single bandpass filter may be used to generate Raman scattered light from the sample, and while the laser is being tuned, the Raman spectrum is scanned across the transmission band of the single bandpass filter. However, the plurality of bandpass filters may be an alternative to a broadly tunable laser.

The plurality of bandpass filters has different central bandpass wavelengths, and thus different transmission bands. The different transmission bands may be configured such that they cover different wavelength bands and thus may be used to cover different wavelength portions of the Raman spectrum. The different transmission bands may be distributed by wavelength such that they together cover the full Raman spectrum.

By way of example, the tunable laser may, instead of being tuned across a broad wavelength range, be tuned across a narrower wavelength range, when a first bandpass filter of the plurality of bandpass filters is arranged in front of the light detector. Only a first portion of the Raman spectrum may therefore be scanned across the transmission band of the first bandpass filter. Once the tunable laser has completed the tuning, the first bandpass filter may be replaced by a second bandpass filter of the plurality of bandpass filters. Further, the light detector may be moved to a different position. The tunable laser may be tuned over the wavelength range again, whereby a second portion of the Raman spectrum may be scanned across the second bandpass filter. This may be repeated until the full Raman spectrum has been acquired.

By way of example, a combination of three different bandpass filters may be combined with a laser tunable across a narrow wavelength range, yet still have enough tunability to cover the appropriate part of the Raman spectrum. Given as non-limiting examples, such a tunable laser may be a DFB laser or a DBR laser.

According to an embodiment, the apparatus further comprises a plurality of light detectors, wherein each light detector of the plurality of light detectors is associated with a mutually unit bandpass filter of the plurality of bandpass filters,
wherein the light collecting and filtering arrangement is further configured to split the collected Raman scattered light as incident light onto the plurality of bandpass filters, wherein, for each bandpass filter, an angle of incidence of the incident light is matched to a filter acceptance angle of the associated bandpass filter; and
wherein each light detector is configured to receive the Raman scattered light filtered by the associated bandpass filter, and to detect an intensity of the received Raman scattered light, such that each light detector detects a separate portion of the Raman spectrum of the sample during the wavelength scan.

Thus, alternatively to repeating the tuning of the tunable laser, and replace the bandpass filter in front of the light detector therebetween, the apparatus may comprise a plurality of light detectors each of which being associated with a mutually unique bandpass filter. In this manner, when the laser is tuned, different portions of the Raman spectrum may be scanned across different bandpass filters. Thus, the different portions forming the full Raman spectrum may be acquired simultaneously by the plurality of light detectors.

It serves to mention that it may be advantageous if the transmission bands of the different bandpass filters have a slight overlap between consecutive portions of the Raman spectrum, in order to help stich the portions together to a full Raman spectrum.

An advantage with either of these two embodiments is that a broadly tunable laser may not be required. Rather a tunable laser with a more narrow tuning range may be used, yet the apparatus may acquire the full Raman spectrum.

According to an embodiment, the apparatus for Raman spectroscopy comprises a plurality of tunable lasers, wherein each tunable laser of the plurality of tunable lasers has a different central wavelength and is tunable over a different wavelength range of the laser light.

By the present arrangement, each tunable laser may be tunable across a narrower wavelength range. The plurality of tunable lasers may be an alternative to using a broadly tunable laser. The plurality of tunable lasers may have different central wavelengths and/or may be tunable over different wavelength ranges. The different wavelengths of laser light may be configured such that they cover different Raman peaks of the Raman spectrum. Put differently, Raman scattered light induced by different lasers may have different Raman peaks falling within the transmission band of the bandpass filter. Thus, by using a plurality of tunable lasers in combination with a single bandpass filter different portions of the Raman spectrum may be detected by the light detector when using different lasers, such that the Raman spectrum may be acquired after having completed the scans of all of the plurality of lasers.

By way of example, three DFB lasers, with carefully placed central wavelengths, may be combined with a single bandpass filter to acquire the relevant part of the Raman spectrum.

According to an embodiment, the apparatus may further comprise an illumination unit of which the tunable laser forms part, wherein the illumination unit is configured to provide a wavelength modulation for generating and outputting wavelength modulated laser light towards the sample for inducing generation of Raman scattered light from the sample.

The illumination unit may be configured to provide a wavelength modulation signal for providing the wavelength modulation. The wavelength modulation of the illumination unit may be superimposed on the scanning of the wavelength over the wavelength range. Thus, the illumination unit may a tunable illumination unit configured for outputting the wavelength modulated laser light, wherein a center wavelength of the wavelength modulated laser light is tunable over the wavelength range.

The apparatus may thus be configured to scan the center wavelength of the output wavelength modulated laser light over the wavelength range and to detect the intensity of the received Raman scattered light, through the light collecting and filtering arrangement, by the light detector for forming a Raman spectrum of the sample.

The Raman scattered light has a fixed frequency difference from the excitation light, thus when the wavelength of the laser is modulated also the Raman scattered light will be modulated.

According to an embodiment, the illumination unit is further configured to provide the wavelength modulation such that at least a portion of a Raman line of the Raman scattered light is modulated into and out of a transmission region of the wavelength filter during the wavelength modulation.

However, potential fluorescence from the sample is insensitive to the small changes in the laser wavelength of the modulation, and may therefore not be significantly affected. By monitoring the response signal from the light detector coming only at the modulation frequency, the Raman signal may be extracted free from fluorescence interference.

The apparatus may comprise a mixing unit configured to receive the response signal from the light detector and the wavelength modulation signal. The mixing unit may mix the response signal with the wavelength modulation signal forming a mixed signal, allowing the intensity of the received Raman scattered light to be determined.

By the term "mixing unit" is here meant any device which may receive the response signal from the light detector and the wavelength modulation signal and mix them. By way of example, the wavelength modulation signal may be mixed by multiplication with the response signal from the light detector. Multiplication may be followed by determining the sum (or integral) of the signal over a time during which the response signal is detected. It should be realized, however, that as an alternative to determining the sum, any other suitable operation which result is proportional to the sum may be determined, such as an average or low-pass filtering. It serves to mention that the above-mentioned procedure may be carried out either by analog electronics or digitally in post-processing by software. It should be realized that the mixing unit may have the function of a lock-in amplifier.

The above-mentioned procedure may provide phase sensitive detection. When using a bandpass filter in front of the light detector, the spectrum resulting from the above-mentioned procedure, is proportional to the derivative of the Raman spectrum. Therefore, the Raman spectrum may be reconstructed through an indefinite integral of that signal. Without phase sensitivity, for example by measuring only the amplitude of the modulation signal, the resulting spectrum would be proportional to only the magnitude of the derivative of the Raman spectrum, from which it would be difficult to reconstruct the Raman spectrum.

An advantage with this embodiment is that interference from fluorescence with the Raman scattered light may be reduced, or even eliminated. A number of samples, as for example, samples comprising organic molecules, may emit fluorescence induced by the tunable laser. Laser induced fluorescence is typically much stronger than Raman scattered light from the same illumination. By using conventional Raman spectroscopy, fluorescence may interfere with the Raman signal, making it challenging to acquire the Raman spectrum. However, by the present embodiment, the quality of the Raman spectrum may be improved, even for samples comprising fluorescence compounds.

According to an embodiment, the light detector, configured to receive the Raman scattered light filtered by the wavelength filter, may be further configured to provide an instantaneous response signal dependent on an intensity of the received Raman scattered light.

As opposed to e.g. imaging detectors such as CCD or a CMOS which typically integrate the signal to accumulate charges during an exposure time, prior to the signal being read out from the device, the light detector of the apparatus may be of a non-integrating type. The light detector of the present disclosure may be a non-imaging light detector, or a single point detector. The light detector may provide a continuous read-out of the response signal.

As will be discussed below, an advantage of this embodiment is that faster read-out of the response signal may be provided, and in turn this allows for higher wavelength modulation frequencies. Higher wavelength modulation frequencies may provide improved signal-to-noise ratio.

According to an embodiment, the illumination unit is configured to provide the wavelength modulation at a modulation frequency of 10 Hz or higher, preferably 1 kHz or higher, and more preferably at 1 MHz or higher.

Wavelength modulated Raman spectroscopy may provide improved signal-to-noise ratio. The improvement in signal-to-noise ratio comes from the reduction of 1/f noise, by suppressing low frequency components with a high modulation frequency. Compared to conventional Raman spectroscopy using a spectrometer and an imaging detector, a fixed readout noise it typically added to the 1/f noise. In such a case, increasing the modulation frequency would require increasing also the readout frequency and hence increasing the readout noise. Therefore, a typical modulation frequency for conventional Raman spectroscopy may be 1 - 2 Hz.

However, a Raman spectrum from an apparatus according to the present disclosure, which uses a tunable laser along with a bandpass filter and fast light detector may not suffer from the same readout noise limitation as conventional Raman spectroscopy. Therefore, the apparatus of the present disclosure enables wavelength modulated Raman spectroscopy at much higher frequencies than possible with spectrometer based systems.

There are several possible light detector types which may be used for the apparatus of the present disclosure. By way of example, a single photon counting module based on an avalanche photodiode may be use as the light detector. This light detector provides excellent light sensitivity and high bandwidths at or above 10 GHz. By such an arrangement, the improvement in signal-to-noise ratio as compared to that of a spectrometer based Raman spectroscopy may be considerable. However, it serves to mention that this improvement in signal-to-noise ratio may be traded for use of a low-cost light detector, which otherwise would not be possible to use for Raman spectroscopy.

An advantage with the present embodiment is thus that the signal-to-noise ratio of the measurement may be further improved.

According to a second aspect there is provided a method for Raman spectroscopy, said method comprising:
inducing generation of Raman scattered light from a sample by outputting laser light, from a tunable laser, towards the sample;
receiving and collecting, by a light collecting and filtering arrangement, the Raman scattered light in a collection angle from the sample;
providing, by the light collecting and filtering arrangement, the collected Raman scattered light as incident light onto a bandpass filter, wherein the bandpass filter is a narrow bandpass filter comprising a transmission band with a full width at half maximum, FWHM, of 0.2 nm or less, and preferably 0.02 nm or less, and wherein an angle of incidence of the incident light is matched to a filter acceptance angle of the bandpass filter;
receiving, by a light detector, the Raman scattered light filtered by the light collecting and filtering arrangement;
scanning the wavelength of the output laser light over the wavelength range; and
detecting, by the light detector, an intensity of the received Raman scattered light, for forming a Raman spectrum of the sample.

Effects and features of the second aspect are largely analogous to those described above in connection with the first aspect. Embodiments mentioned in relation to the first aspect are largely compatible with the second aspect. It is further noted that the disclosure relates to all possible combinations of features unless explicitly stated otherwise.

Other objectives, features and advantages of the present disclosure will appear from the following detailed description, from the attached claims as well as from the drawings.

### Brief descriptions of the drawings

The above, as well as additional objects, features and advantages of the present disclosure, will be better understood through the following illustrative and non-limiting detailed description, with reference to the appended drawings. In the drawings like reference numerals will be used for like elements unless stated otherwise.
Fig. 1A schematically illustrates an apparatus for Raman spectroscopy comprising an atomic line filter.
Fig. 1B illustrates an example of a spectrum from an olive oil sample.
Fig. 2A schematically illustrates an alternative configuration of the apparatus for Raman spectroscopy comprising a combination of an atomic line filter and an interference filter.
Fig. 2B schematically illustrates another alternative configuration of the apparatus for Raman spectroscopy comprising a combination of an atomic line filter and a dichroic mirror.
Fig. 2C schematically illustrates yet another alternative configuration of the apparatus for Raman spectroscopy comprising a combination of two atomic line filters and a dichroic mirror.
Fig. 3A schematically illustrates an apparatus for Raman spectroscopy comprising an optical resonator and a waveguide.
Fig. 3B illustrates a transmission spectrum of a bandpass filter based on an optical resonator in combination with an interference filter.
Fig. 4A schematically illustrates an apparatus for Raman spectroscopy comprising three bandpass filters and three respective light detectors.
Fig. 4B illustrates an example of a Raman spectrum of olive oil overlayed with examples of the accessible range in Raman shift for three different atomic line filters when used in combination with a tunable laser tunable over a wavelength range from 735 to 785 nm.
Fig. 5A schematically illustrates an apparatus for Raman spectroscopy, capable of providing wavelength modulation superimposed onto the wavelength scanning.
Fig. 5B schematically illustrates a Raman peak being shifted along the horizontal axis of the graph during wavelength modulation.
Fig. 5C illustrates an example of a spectrum from an olive oil sample, wherein the interference from fluorescence have been eliminated from the Raman spectrum.
Fig. 6 illustrates a schematic block diagram shortly summarizing the method for Raman spectroscopy

### Detailed description

In cooperation with attached drawings, the technical contents and detailed description of the present inventive concept are described thereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

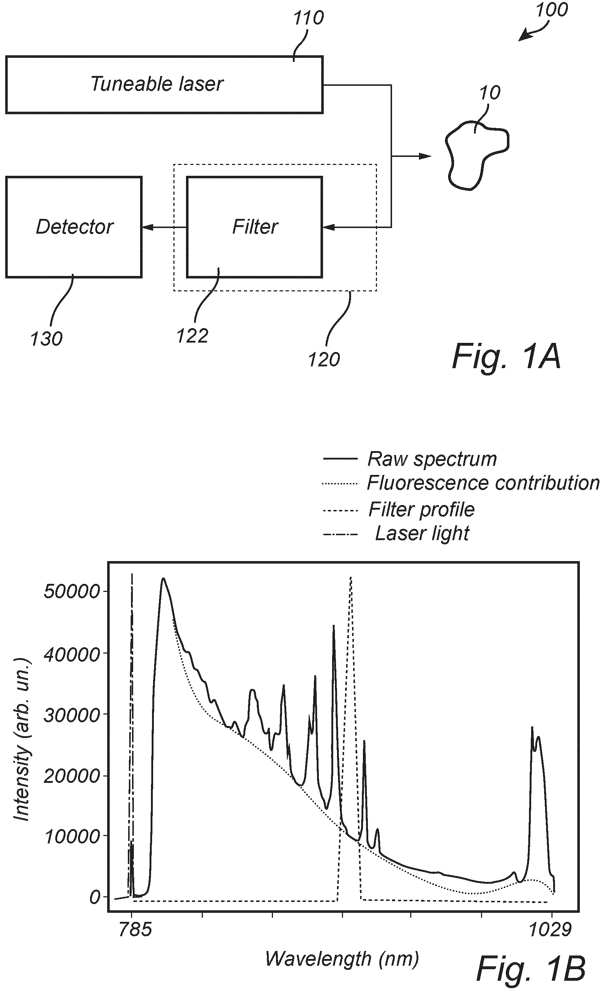

Fig. 1A schematically illustrates an apparatus 100 for Raman spectroscopy. The apparatus 100 is configured to acquire a Raman spectrum from a sample 10.

The apparatus 100 comprises a tunable laser 110 configured to output laser light towards the sample 10. The laser light reaching the sample 10 may induce generation of Raman scattered light from the sample 10. The composition of the sample 10 and the molecular structure therein provide a Raman spectrum with a number of peaks, in which the wavelength position of the peaks, the number of peaks, and the relative intensity of the peaks provide a fingerprint of the molecular composition of the sample 10. An example of a spectrum is illustrated in Fig. 1B, the details of which will be discussed later.

The apparatus 100 further comprises a light collecting and filtering arrangement 120. Some of the Raman scattered light from the sample 10 may reach the light collecting and filtering arrangement 120. The Raman scattered light from the sample 10, reaching the light collecting and filtering arrangement 120 within a specific collection angle may be collected by the light collecting and filtering arrangement 120. Since the Raman scattered light is weak and emitted substantially isotropic from the sample 10, it is typically desired to collect the Raman scattered light from a large collection angle.

The light collecting and filtering arrangement 120 is configured to provide the collected Raman scattered light as incident light onto a bandpass filter 122. In order to provide high spectral resolution, the bandpass filter 122 is a narrow bandpass filter with a transmission band with a full width at half maximum, FWHM, of 0.2 nm or less. For even higher spectral resolution, the bandpass filter 122 may have a FWHM of 0.02 nm or less.

The light collecting and filtering arrangement 120 is further configured such that the angle of incidence of the light incident onto the bandpass filter 122 is matched to a filter acceptance angle of the bandpass filter 122. Put differently, most of the light incident onto the bandpass filter 122, and preferably all of the light incident onto the bandpass filter 122, has an angle of incidence within the acceptance angle of the bandpass filter 122. In this manner, most, and preferably all, light incident onto the bandpass filter 122 may be spectrally filtered correctly by the bandpass filter 122.

In the present example, the bandpass filter 122 of the apparatus 100 is an atomic line filter. Since an atomic line filter may have a very large acceptance angle limit, there may not be a need to for example collimate the collected light in order for the angle of incidence of the light incident onto the bandpass filter 122 to match the acceptance angle of the bandpass filter 122. Most, and preferably all light incident onto the atomic line filter may be filtered uniformly across the large collection angle, within which the Raman scattered light is collected. Thus, the bandpass filters 122 filtering effect on wavelength of the collected Raman scattered light may be independent of the angle of incidence.

The apparatus 100 further comprises a light detector 130, configured to receive the Raman scattered light filtered by the light collecting and filtering arrangement 120. In this manner, the light detector 130 may detect the intensity of the received Raman scattered light, having passed the narrow transmission band of the bandpass filter 122. The Raman scattered light reaching the light detector 130 corresponds to only a spectrally narrow portion of the full Raman spectrum due to the spectral filtering provided by the light collecting and filtering arrangement 120.

However, the wavelength of the laser light from the tunable laser 110 is tunable over a wavelength range. In other words, the output laser light from the tunable laser 110 may be scanned to output laser light of different wavelengths at different points in time. Since the Raman scattered light has a fixed frequency difference from the excitation laser light, also the spectrum of Raman scattered light will be scanned when the wavelength of the tunable laser 110 is scanned.

This means that the portion of the Raman spectrum reaching the light detector 130 will shift during the wavelength scanning of the tunable laser 110. Thus, by detecting the intensity of the received Raman scattered light by the light detector 130 over time, the apparatus 100 may acquire a Raman spectrum of the sample 10.

Fig. 1B illustrates an example of a spectrum from an olive oil sample. The dashdotted peak to the left corresponds to the laser excitation line. The solid curve is the spectrally resolved light from the sample, induced by the excitation laser line. The Raman lines of the Raman spectrum are shown as sharp peaks. These Raman lines form the fingerprint of the sample. In the present example the excitation laser does not only induce Raman scattering, but also fluorescence from the sample. The broad emission below the Raman lines comes from this laser induced fluorescence. The dotted curve represents the fluorescence contribution alone. Thus, from the graph it is clear that the Raman lines may be superimposed onto the fluorescence.

The transmission band of the bandpass filter is represented by the dashed curve of Fig. 1B. The transmission band of the bandpass filter is typically fixed with respect to wavelength. However, as mentioned in relation to Fig. 1A, the output wavelength of the tunable laser may be scanned over a certain wavelength range. Thus, the dashdotted peak representing the laser line in Fig. 1B may shifted to the left and/or right in the graph as the wavelength of the tunable laser is scanned. Since the Raman scattered light has a fixed frequency difference from the excitation laser light, also the Raman peaks of the solid curve will be shifted to the left and/or right when the wavelength of the laser is scanned, thereby following the shifting of the laser peak. Since the transmission band of the bandpass filter is fixed, this means that as the laser wavelength is scanned, the Raman lines may be scanned in and out of the transmission band of the bandpass filter. The Raman peaks may therefore be detected by the light detector over the time of the scan. In this manner, time may be considered to be converted to wavelength of the spectrum. By the present arrangement, the apparatus may acquire a Raman spectrum of the sample.

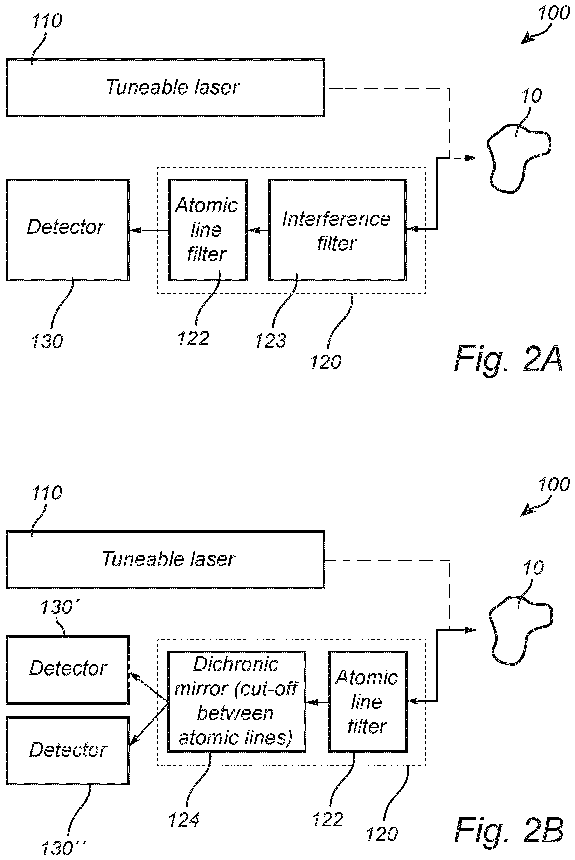

Fig. 2A schematically illustrates an alternative configuration of the apparatus 100 for Raman spectroscopy. The atomic line filter 122 may have more than one resonance, occurring at different wavelengths. In such a case, the atomic line filter 122 may have several transmission bands, one at each of the resonances. Consequently, light at different wavelength bands may be unintentionally detected by the light detector 130 simultaneously. In order to avoid interference from different wavelength at the light detector 130, the light collecting and filtering arrangement 120 may optionally comprise an interference filter 123. In such a case, the atomic line filter 122 and the interference filter 123 may form a filter set, through which the collected Raman scattered light may pass. The combination of the atomic line filter 122 and the interference filter 123 may be configured such that the filter set transmits light at a single line of the atomic line filter 122.

It serves to mention that by replacing the interference filter 123 by other interference filters, light at more than one line of the atomic line filter 122 may be detected sequentially.

Fig. 2B schematically illustrates another alternative configuration of the apparatus 100 for Raman spectroscopy. Here, instead of an interference filter as described in connection with Fig. 2A, the light collecting and filtering arrangement may optionally comprise a dichroic mirror 124. In such a case, the atomic line filter 122 and the dichroic mirror may form a filter set.

The collected Raman scattered light may first pass the atomic line filter 122, through which a number of wavelength lines may be transmitted to subsequently reach the dichroic mirror 124. The dichroic mirror 124 may comprise a cut-off reflectance such that the dichroic mirror may transmit light at a first line and reflect light at a second line of the atomic line filter 122. Two light detectors 130', 130" may be included in the apparatus 100 arranged to detect light at the first and second lines, respectively. By the present arrangement, light at two atomic lines of the atomic line filter 122 may be detected simultaneously.

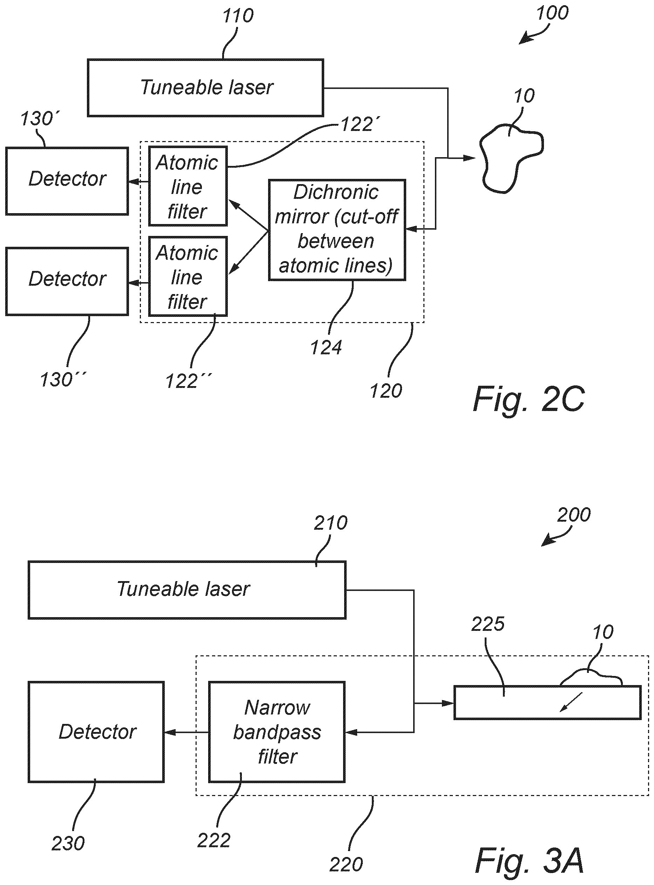

Fig. 2C schematically illustrates yet another alternative configuration of the apparatus 100 for Raman spectroscopy. Here, the light collecting and filtering arrangement 120 is configured such that the collected Raman scattered light first reaches a dichroic mirror 124. The dichroic mirror 124 may comprise a cut-off reflectance such that the dichroic mirror may for example transmit light at wavelengths longer than the cut-off wavelength, and may reflect light at wavelengths shorter than the cut-off wavelength. By the present arrangement, the collected Raman scattered light may be spectrally split and the two parts of the split light may be provided to a respective atomic line filter of two atomic line filters 122', 122". This allows for the two light paths to be provided with different atomic line filters 122', 122", wherein the atomic line filters 122', 122" may be configured for different atomic lines. Light from the two atomic line filters 122', 122" may subsequently be detected by a respective light detector 130', 130". In this manner, light at two different atomic lines of two different atomic line filters 122', 122" may be detected simultaneously.

Fig. 3A schematically illustrates an apparatus 200 for Raman spectroscopy. The apparatus 200 is configured to acquire a Raman spectrum from a sample 10. The apparatus 200 shares some of the features with the apparatus 100 described in relation to Fig. 1A, the details of which are not repeated here.

The apparatus 200 comprises a tunable laser 210 configured to output laser light towards the sample 10, and to scan the wavelength of the output laser light. The laser light reaching the sample 10 may induce generation of Raman scattered light from the sample 10, wherein the spectrum of Raman scattered light will also be scanned when the wavelength of the laser 210 is scanned.

The apparatus 200 further comprises a light collecting and filtering arrangement 220. In the present example, the light collecting and filtering arrangement 220 may be provided as a photonic integrated circuit, PIC. The light collection and filtering arrangement 220 may comprise a waveguide 225. By way of example, the sample 10 may be provided on a side of the waveguide 225. By the present arrangement, the waveguide 225 may collect the Raman scattered light by evanescent coupling from the sample 10 into the waveguide 225. This allows Raman scattered light to be collected in a large collection angle from the sample 10. The waveguide 225 may be further configured to guide the collected Raman scattered light along an extension of the waveguide 225, to the bandpass filter 222.

As illustrated in Fig. 3A, the waveguide 225 may be configured to also guide the laser light towards the sample 10. However, it is conceivable that other alternative manners of guiding the laser light towards the sample 10 may be used, such as by using a separate waveguide, a separate optical fiber, or by using mirrors and/or prisms.

In the present example, the bandpass filter 222 may comprise an optical resonator. By way of example, the optical resonator of the bandpass filter 222 may be an on-chip Bragg grating, but may alternatively be a set of ring resonators, or a combination of an etalon and interference filter.

A bandpass filter 222 based on an optical resonator may provide a narrow transmission band, and thereby high spectral resolution for Raman spectroscopy. However, the optical resonator may typically also comprise a narrow acceptance angle. In order not to lose a significant part of the collected light during filtering, the angle of incidence of the incident light onto the bandpass filter 222 is matched to the filter acceptance angle of the bandpass filter 222. In the present arrangement, the waveguide 225 may collect Raman scattered light from a large collection angle, and collimate the collected light as it propagates along the waveguide. In this manner, when the collected light reaches the bandpass filter 222, it is incident onto the bandpass filter 222 with a narrow angle of incidence matching the acceptance angle of the bandpass filter 222. The arrangement described above allows for a large collection angle to be used to collect a large portion of the isotropic Raman scattered light form the sample 10, and allowing to combine this with filtering the Raman scattered light uniformly across the large collection angle, within which the Raman scattered light is collected. In this manner, an apparatus for Raman spectroscopy may be provided which does not greatly limit the etendue of light reaching the light detector.

The apparatus 200 further comprises a light detector 230, configured to receive the Raman scattered light filtered by the light collecting and filtering arrangement 220. In this manner, the light detector 230 may detect the intensity of the received Raman scattered light, having passed the narrow transmission band of the bandpass filter 222. The Raman spectrum reaching the light detector 230 will shift during the wavelength scanning of the tunable laser 210. Thus, by detecting the intensity of the received Raman scattered light by the light detector 230, the apparatus 200 may acquire a Raman spectrum of the sample 10.

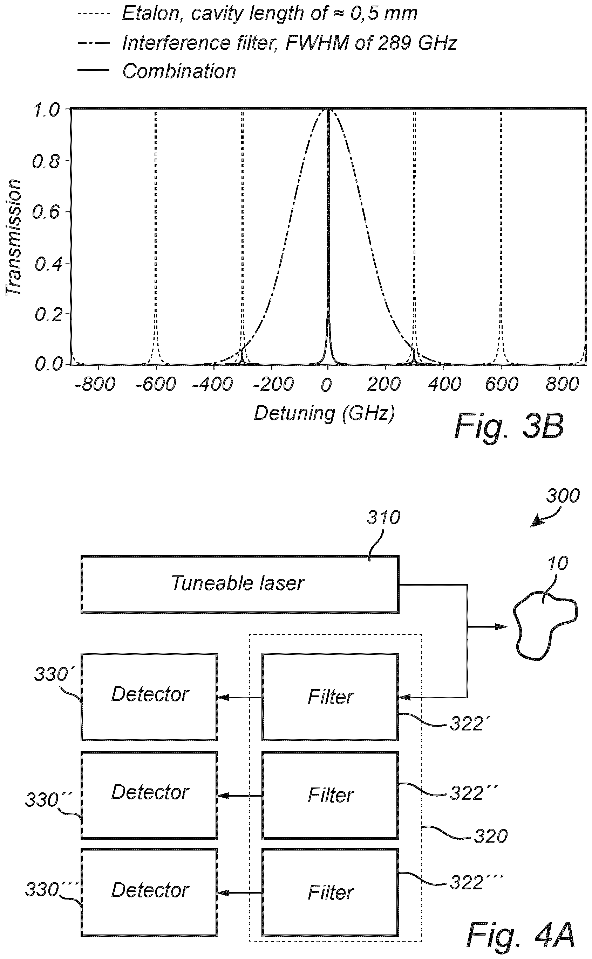

Fig. 3B illustrates a transmission spectrum of a bandpass filter based on an optical resonator in combination with an interference filter.

A bandpass filter based on an optical resonator may provide periodic transmission bands. This is illustrated by the dashed curve showing a number of transmission peaks. In the present example, the optical resonator is a Fabry-Perot etalon. However, it should be realized that the principle of periodic transmission bands is valid also for other optical resonators.

The transmission of the interference filter is illustrated by the dashdotted curve. In order for the combination of the two filters to provide a single line, the free spectral range of the optical resonator needs to be greater than the width of the transmission band of the interference filter, as illustrated in Fig. 3B.

Fig. 3B relates to an example combination of interference filter with an etalon, where zero detuning corresponds to a frequency of 351.922 THz, chosen such that it coincides with a 1000 cm⁻¹ Raman shift when exciting with 785 nm laser light. The interference filter has a FWHM of 0.7 nm. The etalon comprises two mirrors with an air spaced cavity of 0.5 mm length. The combined transmission band has a FWHM of 4.9 GHz

The described combination of filters may improve the spectral resolution. However, the optical resonator may comprise a narrow acceptance angle, restricting the etendue of Raman scattered light from the sample. Restriction of the etendue means that much of the signal will be lost, meaning a high sensitivity light detector may be needed which ultimately increases the cost of the solution. In order not to lose a significant part of the collected light during filtering, the angle of incidence of the incident light onto the bandpass filter, i.e. the Fabry-Perot etalon in the present example, may be matched to the filter acceptance angle of the bandpass filter. As described in connection with Fig. 3A, this may be achieved by using a waveguide to collect Raman scattered light at a wide collection angle, and guiding the light in the waveguide to reach the bandpass filter at a narrow angle of incidence, if the bandpass filter is for example a Bragg grating. In case of using a Fabry-Perot etalon, Raman scattered light from the sample may be collected at a wide collection angle by a lens, which may be configured to collimate the light and provide the collected light at normal incidence onto the bandpass filter.

It should be realized that the above-mentioned approach may require that the light is collected from a small area on the sample. When the light is collected from a small area on the sample, it is possible to collimate the light to a sufficient degree. Put differently, the light collected should be of small etendue. The above-mentioned approach is therefore typically most applicable to Raman confocal microscopy.

Fig. 4A schematically illustrates an apparatus 300 for Raman spectroscopy. The apparatus 300 is configured to acquire a Raman spectrum from a sample 10. The apparatus 300 shares some of the features with the apparatus 200 described in relation to Fig. 3A, and with the apparatus 100 described in relation to Fig. 1A, the details of which are not repeated here.

The apparatus 300 comprises a tunable laser 310 configured to output laser light towards the sample 10, and to scan the wavelength of the output laser light. The laser light reaching the sample 10 may induce generation of Raman scattered light from the sample 10, wherein the spectrum of Raman scattered light will also be scanned when the wavelength of the laser 310 is scanned.

The apparatus 300 further comprises a light collecting and filtering arrangement 320. In the present example, the light collecting and filtering arrangement 320 may comprise a plurality of bandpass filters 322', 322", 322'", and in the present example three bandpass filters 322', 322", 322'". In order to provide high spectral resolution, each of the bandpass filters 322', 322", 322‴ is a narrow bandpass filter with a transmission band with a full width at half maximum, FWHM, of 0.2 nm or less. For even higher spectral resolution, each of the bandpass filters 322', 322", 322‴ may have a FWHM of 0.02 nm or less. It should be realized that each bandpass filter 322', 322", 322‴ of the plurality of bandpass filters 322', 322", 322‴ has a different central bandpass wavelength and thus a different transmission band. The different transmission bands may cover different wavelength portions of the Raman spectrum. The different transmission bands may be distributed by wavelength such that they together cover the full Raman spectrum once the scan of the laser is completed.

The light collecting and filtering arrangement 320 may be configured to split the collected Raman scattered light as incident light onto the three bandpass filters 322', 322", 322'". For each bandpass filter 322', 322", 322'", the angle of incidence of the incident light is matched to the filter acceptance angle of the associated bandpass filter 322', 322", 322'". It serves to mention that such matching may be achieved, for example, in the same manner as described in relation to the apparatus 100 of Fig. 1A or the apparatus 200 of Fig. 3A.

The apparatus 300 may further comprise a plurality of light detectors 330', 330", 330'", and in the present example three light detectors 330', 330", 330'''. Each light detector 330', 330", 330‴ is associated with a mutually unit bandpass filter 322', 322", 322'". Each light detector 330', 330", 330‴ is arranged to receive the Raman scattered light filtered by the associated bandpass filter 322', 322", 322'".

Each light detector 330', 330", 330‴ is configured to detect an intensity of the received Raman scattered light. By the present arrangement, each light detector 330', 330", 330‴ detects a separate portion of the Raman spectrum of the sample 10 during the wavelength scan. Thus, the different portions forming the full Raman spectrum may be acquired simultaneously by the three light detectors 330', 330", 330'". In the manner described above, the tunable laser 310 may be a tunable laser 310 with a more narrow tuning range, yet the apparatus 300 may acquire the full Raman spectrum.

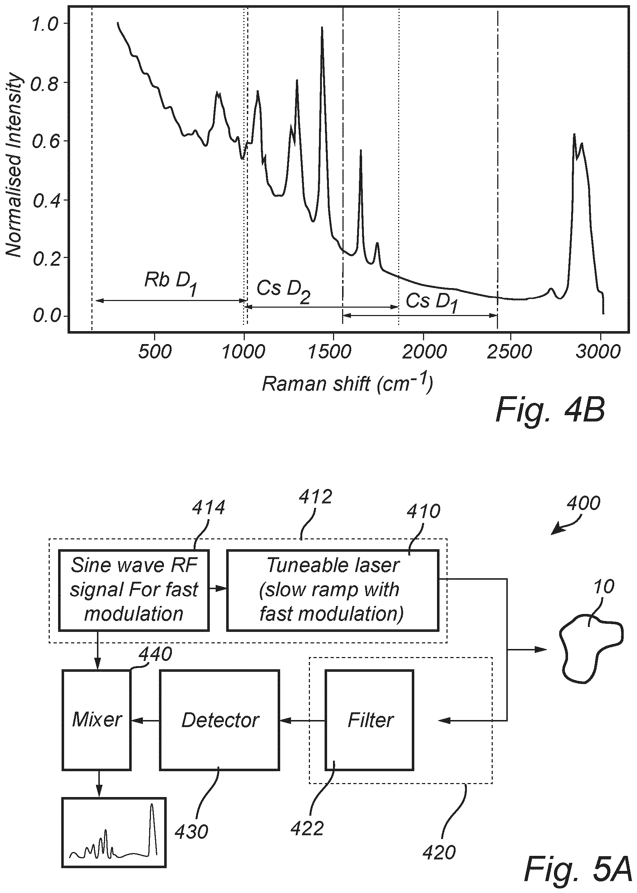

Fig. 4B illustrates an example of a Raman spectrum of olive oil overlayed with examples of the accessible range in Raman shift for three different atomic line filters when used in combination with a tunable laser tunable over a wavelength range from 735 to 785 nm. By using the atomic lines of Rubidium D₁ and Cesium D₁ & D₂ it is possible to cover the range 160 to 2430 cm⁻¹, with some overlap, using said tunable laser. The wavelength range of tunable laser light may be provided with a variety of different laser types, as for example grating based external-cavity diode lasers (ECDLs), distributed Bragg reflector ECDLs, Titanium-sapphire lasers, as well as lasers utilizing integrated photonics techniques such as on-chip titanium-sapphire lasers , Vernier ring based on-chip ECDLs and Mach-Zehnder interferometer based on-chip ECDLs .

Fig. 5A schematically illustrates an apparatus 400 for Raman spectroscopy, capable of providing wavelength modulation superimposed onto the wavelength scanning. The apparatus 400 is configured to acquire a Raman spectrum from a sample 10. The apparatus 400 shares some of the features with the apparatus 300 described in relation to Fig. 4A, with the apparatus 200 described in relation to Fig. 3A, and with the apparatus 100 described in relation to Fig. 1A, the details of which are not repeated here.

The apparatus 400 comprises an illumination unit 412 of which a tunable laser 410 forms part. As in the previously described examples, the tunable laser 410 is configured to output laser light towards the sample 10, and to scan the wavelength of the output laser light thereby inducing generation of Raman scattered light from the sample 10, which will also be scanned when the wavelength of the laser 410 is scanned.

The illumination unit 412 may further comprise a modulation unit 414. The modulation unit 414 is configured to provide a wavelength modulation signal. The wavelength modulation signal may be provided to the tunable laser 410. Following the wavelength modulation signal, the wavelength of the laser light output from the illumination unit 412 may be wavelength modulated. In this manner, a fast wavelength modulation within a narrow modulation range may be superimposed on the tuning of the wavelength over the wider wavelength range. Thus, the illumination unit 412 may be a tunable illumination unit 412 configured for outputting the wavelength modulated laser light, wherein a center wavelength of the wavelength modulated laser light is tunable over the wavelength range.

The apparatus 400 further comprises a light collecting and filtering arrangement 420. Some of the Raman scattered light from the sample 10 may reach the light collecting and filtering arrangement 420. The Raman scattered light from the sample 10, reaching the light collecting and filtering arrangement 420 within a specific collection angle may be collected by the light collecting and filtering arrangement 420. The collected Raman scattered light may be provided as incident light onto a bandpass filter 422.

As previously described in relation to the other figures, the light collecting and filtering arrangement 420 is further configured such that the angle of incidence of the light incident onto the bandpass filter 422 is matched to a filter acceptance angle of the bandpass filter 422. In this manner, most, and preferably all, light incident onto the bandpass filter 422 may be spectrally filtered correctly by the bandpass filter 422. It should be realized that the light collecting and filtering arrangement 420 may be of the same type as any one of the light collecting and filtering arrangement 320 described in relation to Fig. 4A, the light collecting and filtering arrangement 220 described in relation to Fig. 3A, and/or the light collecting and filtering arrangement 120 described in relation to Fig. 1A.

The apparatus 400 further comprises a light detector 430, configured to receive the Raman scattered light filtered by the light collecting and filtering arrangement 420. In this manner, the light detector 430 may detect the intensity of the received Raman scattered light, having passed the narrow transmission band of the bandpass filter 422.

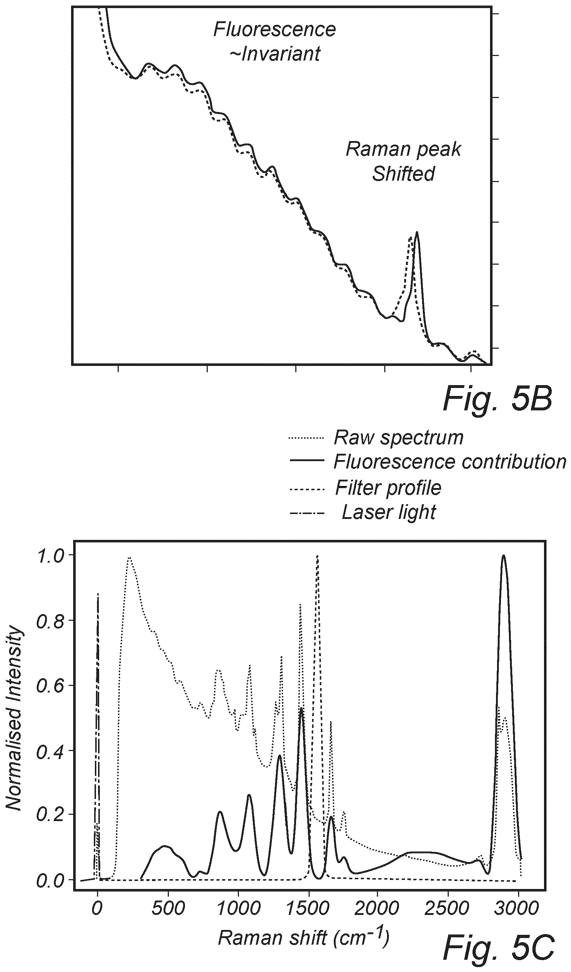

As previously mentioned, the Raman scattered light from the sample 10 has a fixed frequency difference from the excitation laser light. Thus when the wavelength of the laser is modulated also the Raman scattered light will be modulated. This is illustrated in Fig. 5B, showing a Raman peak being shifted along the horizontal axis of the graph, at two different instants during wavelength modulation. However, as also illustrated in Fig. 5B, the fluorescence from the sample 10 is insensitive to the small changes in the laser wavelength of the modulation, and may therefore not be significantly affected. By monitoring the response signal from the light detector 430 coming only at the modulation frequency, the Raman signal may be extracted free from fluorescence interference.

Returning now to Fig. 5A, the light detector 430 may be configured to provide an instantaneous response signal dependent on an intensity of the received Raman scattered light. By way of example, the light detector 430 may be a photodiode such as an avalanche photodiode, or a photo-multiplier tubes (PMT). This allows for much faster readout of the detected signal compared to when using for example an imaging detector such as a CCD or a CMOS. This, in turn allows the apparatus 400 to use much higher modulation frequencies. The illumination unit 412 may therefore be configured to provide the wavelength modulation at a modulation frequency of 10 Hz or higher, preferably 1 kHz or higher, and more preferably at 1 MHz or higher.

The apparatus 400 may comprise a mixing unit 440. The mixing unit 440 may be connected to light detector 430 in order to receive the response signal from the light detector 430. Further, the mixing unit 440 may be connected to the modulation unit 414 of the illumination unit 412 to receive the wavelength modulation signal.

The mixing unit 440 may mix the response signal with the wavelength modulation signal forming a mixed signal. The mixing unit 440 may have the function of a lock-in amplifier. The present arrangement allows the intensity of the received Raman scattered light to be determined with reduced or even eliminated interference from fluorescence from the sample 10. Therefore, the quality of the Raman spectrum may be improved, even for samples 10 comprising fluorescence compounds.

Fig. 5C illustrates an example of a spectrum from an olive oil sample. The dashdotted peak to the left corresponds to the laser excitation line. The dotted curve is the spectrally resolved light from the sample, induced by the excitation laser line. The Raman lines of the Raman spectrum are shown as sharp peaks in the region of ~600 to 1800 cm⁻¹. The broad emission underneath the Raman lines comes from laser induced fluorescence from the sample. The transmission band of the bandpass filter is represented by the dashed curve.

By using wavelength modulation of the laser light, as described in relation to Fig. 5A, at least a portion of a Raman line may be modulated into and out of the transmission band of the bandpass filter. In this manner, the Raman scattered light may be separated from the fluorescence. The wavelength modulation in combination with wavelength scanning over the wavelength range of the tunable laser allows the Raman spectrum to be detected without interference from fluorescence. The resulting Raman spectrum is illustrated by the solid curve of Fig. 5C.

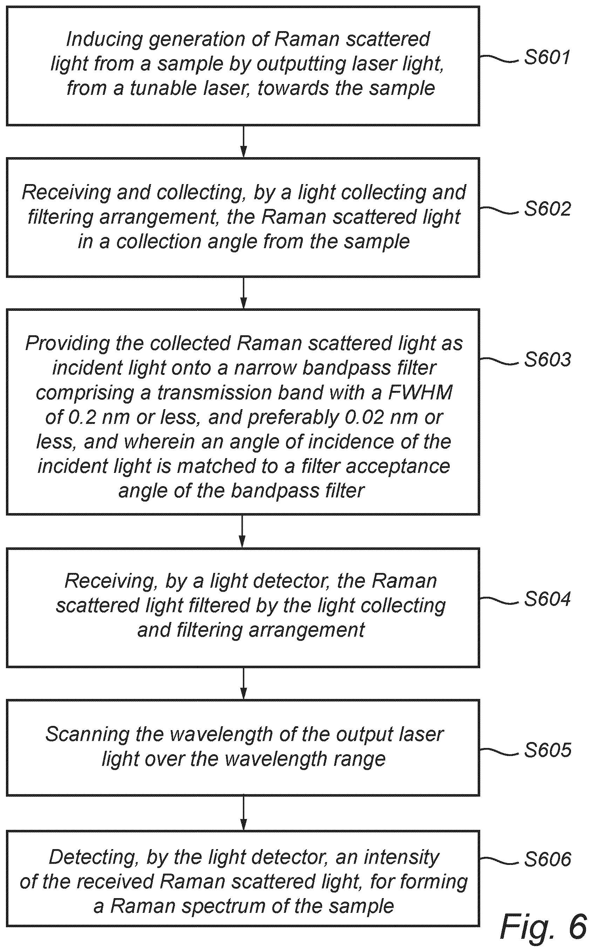

Fig. 6 illustrates a schematic block diagram shortly summarizing the method for Raman spectroscopy. It should be understood that the steps of the method, although listed in a specific order herein, may be performed in any order suitable.

The method may comprise inducing S601 generation of Raman scattered light from a sample by outputting laser light, from a tunable laser, towards the sample.

The method may comprise receiving and collecting S602, by a light collecting and filtering arrangement, the Raman scattered light in a collection angle from the sample.

The method may comprise providing S603, by the light collecting and filtering arrangement, the collected Raman scattered light as incident light onto a bandpass filter, wherein the bandpass filter is a narrow bandpass filter comprising a transmission band with a full width at half maximum, FWHM, of 0.2 nm or less, and preferably 0.02 nm or less, and wherein an angle of incidence of the incident light is matched to a filter acceptance angle of the bandpass filter.

The method may comprise receiving S604, by a light detector, the Raman scattered light filtered by the light collecting and filtering arrangement.

The method may comprise scanning S605 the wavelength of the output laser light over the wavelength range.

The method may comprise detecting S606, by the light detector, an intensity of the received Raman scattered light, for forming a Raman spectrum of the sample.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An apparatus (100, 200, 300, 400) for Raman spectroscopy, said apparatus (100, 200, 300, 400) comprising:
a tunable laser (110, 210, 310, 410) configured to output laser light towards a sample (10) for inducing generation of Raman scattered light from the sample (10), wherein a wavelength of the laser light is tunable over a wavelength range;
a light collecting and filtering arrangement (120, 220, 320, 420) configured to receive and collect the Raman scattered light in a collection angle from the sample (10), wherein the light collecting and filtering arrangement (120, 220, 320, 420) is configured to provide the collected Raman scattered light as incident light onto a bandpass filter (122, 222, 322, 422), wherein the bandpass filter (122, 222, 322, 422) is a narrow bandpass filter comprising a transmission band with a full width at half maximum, FWHM, of 0.2 nm or less, and wherein an angle of incidence of the incident light is matched to a filter acceptance angle of the bandpass filter (122, 222, 322, 422); and
a light detector (130, 230, 330, 430), configured to receive the Raman scattered light filtered by the light collecting and filtering arrangement (120, 220, 320, 420) and to detect an intensity of the received Raman scattered light;
wherein the apparatus (100, 200, 300, 400) is configured to scan the wavelength of the output laser light over the wavelength range and to detect the intensity of the received Raman scattered light by the light detector (130, 230, 330, 430) for forming a Raman spectrum of the sample (10).

2. The apparatus (100, 300, 400) according to claim 1, wherein the bandpass filter (122, 322, 422) is any one of an atomic line filter or a molecular line filter.

3. The apparatus (100) according to claim 2, wherein the light collecting and filtering arrangement (120) further comprises an interference filter (123), wherein the atomic line filter or molecular line filter and the interference filter (123) form a filter set, wherein the light collecting and filtering arrangement (120) is configured to provide the collected Raman scattered light as incident light onto the filter set, and wherein the filter set is configured to transmit light at a single line of the atomic line filter of molecular line filter.

4. The apparatus (100) according to claim 2, wherein the light collecting and filtering arrangement (120) further comprises a dichroic mirror (124), wherein the atomic line filter or the molecular line filter and the dichroic mirror (124) form a filter set, wherein the light collecting and filtering arrangement (120) is configured to provide the collected Raman scattered light as incident light onto the filter set, and wherein the filter set is configured to transmit light at a first line and a second line of the atomic line filter or molecular line filter, into a first path and a second path, respectively.

5. The apparatus (100, 300, 400) according to any one of claims 2 to 4, wherein the tunable laser (110, 310, 410) is any one of a grating based external-cavity diode laser, ECDL, a distributed Bragg reflector ECDL, a Titanium-sapphire laser, an on-chip Titanium-sapphire laser, a Vernier ring based on-chip ECDL, or a Mach-Zehnder interferometer based on-chip ECDL.

6. The apparatus (200) according to claim 1, wherein the bandpass filter (222) comprises an optical resonator.

7. The apparatus (200) according to claim 6, wherein the bandpass filter (222) comprises any one of a Bragg grating, a set of ring resonators, or a combination of an etalon and interference filter.

8. The apparatus (200) according to claim 1, wherein the light collection and filtering arrangement (220) comprises a waveguide (225) configured to collect the Raman scattered light in a collection angle from the sample (10), and to guide the collected Raman scattered light to the bandpass filter (222).

9. The apparatus (200) according to claim 8, further configured to receive the sample (10) on a side of the waveguide (225), and wherein the waveguide (225) is configured to collect the Raman scattered light by evanescent coupling from the sample (10) into the waveguide (225).

10. The apparatus (200) according to any one of claims 8 or 9, wherein the waveguide (225) is further configured to guide the laser light from the tunable laser (210) towards the sample (10).

11. The apparatus (200) according to any one of claims 8 to 10, wherein the light collecting and filtering arrangement (220) is provided as a photonic integrated circuit, PIC.

12. The apparatus (300) according to any of the preceding claims, wherein the light collecting and filtering arrangement (320) comprises a plurality of bandpass filters (322), wherein each bandpass filter (322) of the plurality of bandpass filters (322) has a different central bandpass wavelength.

13. The apparatus (300) according to claim 12, further comprising a plurality of light detectors (330), wherein each light detector (330) of the plurality of light detectors (330) is associated with a mutually unit bandpass filter (322) of the plurality of bandpass filters (322),
wherein the light collecting and filtering arrangement (320) is further configured to split the collected Raman scattered light as incident light onto the plurality of bandpass filters (322), wherein, for each bandpass filter (322), an angle of incidence of the incident light is matched to a filter acceptance angle of the associated bandpass filter (322); and
wherein each light detector (330) is configured to receive the Raman scattered light filtered by the associated bandpass filter (320), and to detect an intensity of the received Raman scattered light, such that each light detector (330) detects a separate portion of the Raman spectrum of the sample (10) during the wavelength scan.

14. A method for Raman spectroscopy, said method comprising:
Inducing (S601) generation of Raman scattered light from a sample by outputting laser light, from a tunable laser, towards the sample;
receiving and collecting (S602), by a light collecting and filtering arrangement, the Raman scattered light in a collection angle from the sample;
providing (S603), by the light collecting and filtering arrangement, the collected Raman scattered light as incident light onto a bandpass filter, wherein the bandpass filter is a narrow bandpass filter comprising a transmission band with a full width at half maximum, FWHM, of 0.2 nm or less, and wherein an angle of incidence of the incident light is matched to a filter acceptance angle of the bandpass filter;
receiving (S604), by a light detector, the Raman scattered light filtered by the light collecting and filtering arrangement;
scanning (S605) the wavelength of the output laser light over the wavelength range; and
detecting (S606), by the light detector, an intensity of the received Raman scattered light, for forming a Raman spectrum of the sample.
